# EUROPÄISCHE PATENTSCHRIFT

(11) **EP 2 722 223 B1**
(45) Veröffentlichungstag und Bekanntmachung des Hinweises auf die Patenterteilung: **29.11.2017**
(21) Anmeldenummer: 12007230.1
(22) Anmeldetag: 19.10.2012
(51) Int. Cl.: B60N 2/427, B60N 2/18, B60N 2/16, B60N 2/50

(54) **Sicherheitssystem für einen Fahrzeugsitz**
Safety system for a vehicle seat
Système de sécurité pour un siège de véhicule

(43) Veröffentlichungstag der Anmeldung: 23.04.2014
(73) Patentinhaber: Metalsa Automotive GmbH, 51702 Bergneustadt (DE)
(72) Erfinder: Kern, Alexander, 51597 Morsbach (DE)
(74) Vertreter: Rebbereh, Cornelia

(56) Entgegenhaltungen:
- WO-A1-2006/134417
- DE-A1- 10 142 984
- DE-A1- 19 847 603
- GB-A- 2 313 214
- US-A1- 2002 125 750

## Beschreibung

Die Erfindung betrifft ein Sicherheitssystem für einen Fahrzeugsitz sowie ein Getriebeglied hierfür (siehe z.B. GB 2 313 214 A, dem Oberbegriff beider unabhängiger Ansprüche 1 und 13 entsprechend). Im Fahrzeugbau, insbesondere im Kfz-Bereich, sind verschiedene Sicherheitssysteme bekannt, bei denen im Falle eines Unfalls oder einer Gefahrensituation ein Antrieb auf eine Fahrzeugkomponente einwirkt, um die Sicherheit für die Fahrzeuginsassen zu erhöhen. Hierunter fallen z. B. Gurtstraffer oder Systeme, die Einstellung oder Position eines Fahrzeugsitzes verändern. Ein besonderes Problem stellen in diesem Zusammenhang Unfälle mit Heckaufprall, z. B. Auffahrunfälle, dar. Hierbei erfährt das Fahrzeug eine plötzliche Beschleunigung nach vorne, was bedeutet, dass die Fahrzeuginsassen relativ zum Fahrzeug eine Beschleunigung nach hinten erfahren. Während der Rücken eines Insassen normalerweise zumindest im unteren Bereich an der Rückenlehne des Sitzes anliegt, befindet sich der Kopf in aller Regel in einem gewissen Abstand von der Kopfstütze. Aus diesem Grund, und aufgrund der höheren Biegsamkeit des Halses im Vergleich zum Rumpf, ist der Halsbereich bei derartigen Unfällen besonders gefährdet. Es kann hierbei, auch wenn der Aufprall nur mit vergleichsweise geringer Geschwindigkeit erfolgt, zu einem so genannten Schleudertrauma kommen, das aus einer Überstreckung der Halswirbelsäule resultiert.

Um die plötzliche Beschleunigung des Kopfes gegenüber dem Fahrzeugsitz, die auch als Whiplash-Effekt bezeichnet wird, zu mildern, sind im Stand der Technik Systeme entwickelt worden, bei denen der Fahrzeugsitz so ausgestaltet ist, dass er in einem solchen Fall im Fahrzeug nach hinten geleitet und ggf. auch gekippt wird. Diese Systeme zielen allein darauf ab, der auf den Insassen wirkenden Beschleunigungskraft nachzugeben. Ein grundsätzliches Problem hierbei ist allerdings, dass die Wegstrecke, entlang der der Sitz verfahren werden kann, begrenzt ist. Hat der Sitz eine Endposition erreicht, können darüber hinaus einwirkende Beschleunigungskräfte dennoch zu Verletzungen des Insassen führen. Des Weiteren ist es schwierig, hierbei den Zeitpunkt und die Geschwindigkeit der Bewegung des Sitzes auf die tatsächlich einwirkende Beschleunigung abzustimmen. Aus der o.g., gattungsbildenden GB 2 313 214 A ist ein aktives Aufhängungssystem für einen Fahrzeugsitz bekannt, das die Fahrzeugbewegung durch Steuern der Sitzbewegung in sechs getrennten Richtungen kompensieren kann. Dazu verfügt das Aufhängungssystem über eine Anzahl von Sitzteilelementen, bevorzugt in Form von hydraulischen Zylindern, die den Sitz sensorgesteuert in zwei oder mehr Richtungen relativ zum Fahrzeug bewegen können: Die Bewegung des Fahrzeugsitzes erfolgt dabei durch das gleichzeitige Ausfahren und Einziehen der Zylinderstangen.

Aus der weiteren Vorveröffentlichung DE 101 42 984 A1 ist eine passives Sicherheitssystem für einen Fahrzeugsitz bekannt, dessen Sitzteil eine gelenkige Struktur aufweist, welche im Falle eines Heckaufpralls durch die Einwirkung von Aufprallenergie eine Geometrieänderung erfährt. Die Geometrieänderung erfolgt vorzugsweise als eine Aufrichtbewegung, welche den die Rückenlehne tragenden hinteren Bereich des Sitzrahmens relativ zum vorderen Bereich anhebt und insgesamt nach hinten verschiebt als Resultat einer Vergrösserung des Abstandes zwischen den unteren Lagerstellen.

Aus der weiteren Vorveröffentlichung DE 198 47 603 A1 ist ein aktives Sicherheitssystem für einen Fahrzeugsitz bekannt, wobei bei einem durch einen Unfallsensor ermittelten Frontaufprall die vordere Sitzrampe anhebbar und entsprechend bei einem Heckaufprall absenkbar ist. Dazu ist das Sitzoberteil mit dem Sitzunterteil über eine in Fahrzeugquernchtung verlaufende Achse schwenkbar angeordnet. Als Schwenkantrieb ist ein pyrotechnischer Antrieb unterhalb des vorderen Sitzabschnittes angeordnet, wobei der Schwenkantrieb und die Schwenkachse jeweils durch Gewichtssensoren abgestützt sind.

Vor diesem Hintergrund ist es Aufgabe der vorliegenden Erfindung, Maßnahmen zum verbesserten Schutz von Insassen eines Fahrzeugs bei einem Heckaufprall vorzuschlagen.

Die Aufgabe wird erfindungsgemäß gelöst durch ein Sicherheitssystem nach Anspruch 1 sowie durch ein Getriebeglied nach Anspruch 13. Weiterbildungen der Erfindung sind in den abhängigen Ansprüchen angegeben. Durch die Erfindung wird zum einen ein Sicherheitssystem für einen Fahrzeugsitz zur Verfügung gestellt. Hierbei bezeichnet "Sicherheitssystem" ein System, bei dem in einer Notfallsituation (also bei einem Unfall oder in eine Gefahrensituation) ein Antrieb auf eine Fahrzeugkomponente einwirkt, um die Sicherheit für die Fahrzeuginsassen zu erhöhen. Als Fahrzeuge kommen in diesem Zusammenhang insbesondere Kraftfahrzeuge wie Pkw oder Lkw infrage. Das erfindungsgemäße Sicherheitssystem weist ein Viergelenk-Getriebe auf. Das Viergelenk-Getriebe umfasst vier Getriebeglieder, die zur Höhenverstellung des Fahrzeugsitzes paarweise drehbar miteinander verbunden sind an einem vorderen oberen Gelenkpunkt, einem hinteren oberen Gelenkpunkt, einem vorderen unteren Gelenkpunkt und einem hinteren unteren Gelenkpunkt. Derartige Systeme zur Höhenverstellung sind im Stand der Technik bekannt. Sie umfassen einen vorderen Lenker (an dem die vorderen Gelenkpunkte angeordnet sind), einen hinteren Lenker (an dem die hinteren Gelenkpunkte angeordnet sind) sowie einen oberen und unteren Schenkel. Vielfach weist der hintere Lenker einen zusätzlichen Gelenkpunkt auf, über den ein Antrieb zur HöhenVerstellung angelenkt ist. Dieser weist oft ein Spindelgetriebe auf, mittels dessen auf den hinteren Lenker Zug bzw. Druck ausgeübt wird. Der obere Schenkel ist typischerweise fest mit der Sitzschale eines Fahrzeugsitzes verbunden oder kann sogar durch diese gebildet sein. Der untere Schenkel ist normalerweise mit einer Sitzschiene verbunden, die zur Führung des Fahrzeugsitzes an einer Bodenschiene dient, oder kann durch diese gebildet sein. Hierbei kann das Viergelenk-Getriebe insbesondere als Parallelogramm-Getriebe ausgebildet sein. In diesem Fall bleiben bei einer Verstellung des Getriebes der obere Schenkel und der untere Schenkel stets parallel. Ein mit dem oberen Schenkel verbundener Fahrzeugsitz wird daher nur nach oben bzw. unten sowie in gewissem Maße nach vorne bzw. hinten verlagert. Daneben sind im Stand der Technik aber auch Viergelenk-Betriebe bekannt, die von der Parallelogrammform abweichen und bei denen eine geschilderte Verschiebung des Sitzes mit einem Verkippen einhergeht. Auch solche Systeme können erfindungsgemäß zum Einsatz kommen. Die Bezeichnungen "Lenker" und "Schenkel" sind hier und im Folgenden nicht dahingehend auszulegen, dass sie eine bestimmte Kraftflussrichtung innerhalb des Getriebes implizieren.

Erfindungsgemäß umfasst das Sicherheitssystem des Weiteren wenigstens einen Antrieb, wobei durch den wenigstens einen Antrieb der Abstand wenigstens zweier benachbarter Gelenkpunkte veränderbar ist, um den Fahrzeugsitz in einer Notfallsituation nach vorne zu kippen. Als "benachbart" gelten hier zwei Gelenkpunkte, die am gleichen Getriebeglied angeordnet sind. Als "Notfallsituation" werden hierbei sowohl Unfallsituation bezeichnet, als auch Gefahrensituation, in denen mit einem bevorstehenden Unfall zu rechnen ist. Eine solche Notfallsituation kann durch im Stand der Technik bekannte Sensoren erkannt und der Antrieb entsprechend angesteuert werden. Hierbei wird mit der Bezeichnung "nach vorne" auf die normale Einbauposition des Viergelenk-Getriebes sowie eines daran anzuordnenden Fahrzeugsitzes abgestellt. Das heißt, es erfolgt eine effektive Dreh- bzw. Kippbewegung, durch die der obere Teil der Rückenlehne mit der daran befindlichen Kopfstütze nach vorne verlagert wird. Daneben geht das Verkippen mit einer Verlagerung des hinteren Teils der Sitzfläche nach oben und / oder einer Verlagerung des vorderen Teils der Sitzfläche nach unten einher. Dieser Effekt ist jedoch eher gering und sicherheitstechnisch unerheblich. Erfolgt das Verkippen schnell genug, was bei nachfolgend noch diskutierten Antrieben innerhalb von wenigen Millisekunden geschehen kann, so bleibt währenddessen die Position eines Insassen im Wesentlichen konstant, so dass der wesentliche Effekt darin besteht, die Rückenlehne und insbesondere die Kopfstütze näher an Rücken und Kopf des Insassen zu bringen.

Das erfindungsgemäße Sicherheitssystem hat mehrere Vorteile. Zum einen kann im Wesentlichen auf eine Schwerpunktverschiebung von Sitz und / oder Insasse verzichtet werden, was die erforderlichen Kräfte reduziert. Besonders vorteilhaft ist, dass hiermit ein Sicherheitssystem zur Verfügung gestellt werden kann, ohne in die eigentliche Sitzkonstruktion, namentlich Sitzfläche oder Rückenlehne, einzugreifen. Wie nachfolgend noch dargestellt wird, kann das erfindungsgemäße Sicherheitssystem so kompakt ausgeführt werden, dass es praktisch ohne sonstige Veränderungen in ein Fahrzeug anstelle eines konventionellen Viergelenk-Getriebes integriert werden kann. Die gegenüber dem konventionellen System zusätzlichen oder sich unterscheidenden Komponenten bringen hierbei ggf. nur eine unwesentliche Gewichtszunahme mit sich. Das Sicherheitssystem lässt sich ohne Weiteres auch bei elektrisch betriebenen Sitzen oder herausnehmbaren Sitzen integrieren.

Es können verschiedene Abstände variiert werden, um den Fahrzeugsitz nach vorne zu kippen. In einer bevorzugten Ausgestaltung der Erfindung ist durch wenigstens einen Antrieb der Abstand zwischen den hinteren Gelenkpunkten verlängerbar. Dies entspricht einer effektiven Verlängerung des hinteren Lenkers. Hieraus resultiert ein Anheben des hinteren Sitzteils, vorausgesetzt der hintere untere Gelenkpunkt bleibt gegenüber dem Fahrzeugboden stationär. Hierbei kann die Verlängerung ggf. soweit fortgesetzt werden, dass der vordere untere Gelenkpunkt und beide oberen Gelenkpunkte auf einer Linie liegen, womit sich eine effektive Dreiecksstruktur ergibt.

Alternativ oder in Kombination hiermit ist bevorzugt vorgesehen, dass durch wenigstens einen Antrieb der Abstand zwischen den unteren Gelenkpunkten verlängerbar ist. Hierbei ist es bevorzugt, dass der vordere untere Gelenkpunkt vorwärts bewegt wird, während der hintere untere Gelenkpunkt gegenüber dem Fahrzeugboden stationär bleibt. Hierdurch wandert der vordere obere Gelenkpunkt zwangsläufig nach unten, was zu einem Verkippen des Sitzes nach vorne führt. Auch hierbei kann die Verlängerung fortgesetzt werden, bis sich die oben beschriebene Dreiecksstruktur ergibt.

Alternativ oder in Kombination mit den dargestellten Verlängerungen ist es auch denkbar, dass der Abstand zwischen den vorderen Gelenkpunkten und / oder der Abstand zwischen den oberen Gelenkpunkten verringert wird. Auch hierdurch lässt sich eine erfindungsgemäße Kippbewegung des Fahrzeugsitzes erreichen.

Es kommen im Rahmen der vorliegenden Erfindung verschiedene Antriebsformen in Frage. Erfindungsgemäss ist wenigstens ein Antrieb pyrotechnisch betreibbar. Hydraulische, pneumatische oder elektrische Antriebsformen haben den Vorteil, dass sich eine hierdurch erzeugte Verschiebung gut kontrollieren lässt, bedingen aber unter Umständen einen relativ hohen Installationsaufwand und lassen sich nur schwer kompakt realisieren, wenn eine hohe Antriebsleistung bzw. schnelle Auslösung erreicht werden soll. Daher ist die pyrotechnische Antriebsform bevorzugt. Hier umfasst der Antrieb einen pyrotechnischen Gasgenerator. Derartige Vorrichtungen sind im Kfz-Bereich z. B. bei Airbags und anderen Sicherheitssystemen bekannt. Im Allgemeinen bezeichnet "pyrotechnischer Gasgenerator" hierbei jede Vorrichtung, in der gezielt eine chemische Reaktion auslösbar ist, die zur Gasentwicklung führt, typischerweise in Form einer Explosion oder eines gezielten Abbrands. In Kombination hiermit können auch Kartuschen mit vorgespanntem Gas verwendete werden, bei denen z. B. ein pyrotechnischer Gasgenerator eine Berstscheibe zerstört und damit den Zustrom von Gas aus der Kartusche zur Antriebseinheit freigibt. Derartige Vorrichtungen sind auch als Hybridgasgeneratoren bekannt. Bei der chemischen Reaktion, die der Funktion des pyrotechnischen Gasgenerators zugrunde liegt, wird extrem schnell Energie freigesetzt und steht für den Antrieb zur Verfügung, was insbesondere bei Unfällen einen entscheidenden Sicherheitsvorteil bedeutet. In jedem Fall impliziert die Verwendung für ein Sicherheitssystem, dass der Antrieb in der Lage sein muss, die vorgesehene Veränderung des Abstandes von Gelenkpunkten, die im Bereich von einigen Millimetern bis einigen Zentimetern liegt, innerhalb von deutlich weniger als 1 Sekunde durchzuführen. Insbesondere dann, wenn der Antrieb bei einem Unfall zum Einsatz kommt, sind kurze Verschiebungszeiten von unter 100 Millisekunden, bevorzugt unter 20 Millisekunden, weiter bevorzugt unter 10 Millisekunden, typisch.

In einer vorteilhaften Variante der Erfindung umfasst wenigstens ein Antrieb einen Wellbalg. Der Wellbalg kann hierbei grundsätzlich hydraulisch oder pneumatisch mit Druck beaufschlagt werden. Bevorzugt wird der Wellbalg in Kombination mit einem Gasgenerator eingesetzt, der innerhalb des Wellbalgs angeordnet sein kann. Wird der Gasgenerator ausgelöst, expandiert der Wellbalg ziehharmonikaartig und erzeugt so eine Schubbewegung. Alternativ zu einem Wellbalg kann beispielsweise auch ein System aus Zylinder und Kolben eingesetzt werden. Beide Systeme eignen sich gut, um die Expansionsbewegung eines durch einen Gasgenerator freigesetzten Gases in eine lineare Schubbewegung umzusetzen. Dies ist insbesondere vorteilhaft bei den Varianten, in denen ein Abstand zwischen zwei Gelenkpunkten vergrößert wird.

Vorteilhaft umfasst ein Getriebeglied ein Basiselement und ein hiermit verschieblich verbundenes Schubelement, zwischen denen ein Antrieb wirkt. Hierbei ist üblicherweise ein Gelenkpunkt an dem Basiselement angeordnet und ein anderer an dem Schubelement. Welches der beiden Elemente hierbei als Basiselement und welches als Schubelement betrachtet wird, ist letztlich willkürlich. Der Antrieb kann hierbei z. B. fest mit dem Basiselement verbunden sein und auf das Schubelements einwirken um dieses - durch Zug oder Schub - zu verschieben. Die beiden Elemente sind hierbei bevorzugt in Richtung der Verbindungslinie der beiden Gelenkpunkte gegeneinander verschiebbar, so dass sich eine Verschiebungsbewegung der beiden Elemente einszu-eins auf den Abstand der Gelenkpunkte auswirkt.

Im Allgemeinen soll eine Veränderung des Abstandes von Gelenkpunkten nur dann erfolgen, wenn der Antrieb aktiviert wird. In manchen Fällen können ungewollte Verschiebungsbewegungen allein durch Reibungskräfte oder die Trägheit von Bauteilen - zumindest weitgehend - verhindert werden. Insbesondere in den Fällen, wo dies nicht möglich ist, umfasst das Sicherheitssystem vorteilhaft eine Verriegelungsanordnung zur Sicherung einer Ruheposition. Die Ruheposition bezeichnet hierbei diejenige Position, in der sich der Antrieb und die mit ihm verbundenen Elemente befinden, wenn er nicht aktiv ist, das heißt, wenn keine Notfallsituation gegeben ist. Die Verriegelungsanordnung kann hierbei direkt auf den Antrieb einwirken, aber sie kann insbesondere auch auf die gleichen Elemente wirken wie der Antrieb. Beispielsweise können die Verriegelungsanordnungen dazu dienen, das oben genannte Basiselement gegenüber dem Schubelement zu arretieren. Es versteht sich, dass die Verriegelungsanordnung dazu vorgesehen ist, gelöst zu werden, um die Funktion des Antriebs bei dessen Aktivierung zu gewährleisten.

Wird eine solche Verriegelungsanordnung in Kombination mit einem Basiselement und Schubelement eingesetzt, so ist bevorzugt vorgesehen, dass wenigstens ein Verriegelungselement in der Ruheposition formschlüssig mit dem Schubelement eingreift, wobei das Verriegelungselement am Basiselement verschieblich angeordnet und in der Ruheposition gegen Verschiebung gesichert ist. Das Verriegelungselement ist hierbei bevorzugt in einer Richtung verschieblich, die von der Richtung abweicht, in der das Schubelement gegenüber dem Basiselement verschieblich ist. Insbesondere können die genannten Richtungen senkrecht zueinander stehen.

Vorteilhaft wird die Verriegelungsanordnung in der Ruheposition durch ein Federelement verriegelt gehalten. Im einfachsten Fall kann hierbei sogar das Federelement selbst als Verriegelungselement dienen. Es sind allerdings verschiedene andere Möglichkeiten denkbar. So kann beispielsweise ein Verriegelungselement durch Kraftbeaufschlagung mittels eines Federelements oder dergleichen gegen Verschiebung gesichert werden. Zum Lösen des Vernegelungselements kann in diesem Fall auf das Federelement derart eingewirkt werden, dass sich die Kraftbeaufschlagung verringert.

In einer Weiterbildung der Erfindung wirkt das Federelement allerdings nicht direkt auf das Verriegelungselement, sondern das Verriegelungselement ist durch wenigstens ein Sperrelement gesichert, das in der Ruheposition durch Beaufschlagung durch das Federelement in formschlüssigem Eingriff mit dem Verriegelungselement gehalten ist. Das heißt, das Sperrelement verhindert die Verschiebung des Verriegelungselements, wodurch wiederum eine Verschiebung des Schubelements verhindert wird. Demnach muss zunächst das Sperrelement gelöst werden, bevor durch eine Verschiebung des Verriegelungselements das Schubelement verschoben werden kann. Bevorzugt ist das Verriegelungselement hierbei dazu ausgestaltet, bei einer Rückkehr in seine Ausgangslage das Verriegelungselement ebenfalls in dessen Ausgangslage zurückzuschieben.

Hat der Antrieb in einer Notfallsituation auf das Viergelenk-Getriebe eingewirkt, um den Fahrzeugsitz erfindungsgemäß zu kippen, sind grundsätzlich zwei Möglichkeiten denkbar, wie das weitere Verhalten des Fahrzeugsitzes beeinflusst werden kann. Gemäß einer Variante kann zugelassen werden, dass der Fahrzeugsitz wieder in Richtung seiner Normalposition zurückkippt. Hierdurch kann ggf. auf den Insassen wirkenden Kräften nachgegeben werden. Es ist hierbei insbesondere auch denkbar eine Dämpfung vorzusehen, damit die beschriebene Rückbewegung nicht schlagartig erfolgt. Gemäß einer anderen bevorzugten Variante sind Mittel zur Sicherung einer Notfallposition vorgesehen. Hierbei bezeichnet Notfallposition eine Position, in die der Antrieb, das Viergelenk-Getriebe sowie ein ggf. hiermit verbundene Fahrzeugsitz durch Aktivierung des Antriebes in einer Notfallsituation gebracht werden. Die Notfallsituation entspricht hierbei typischerweise einem maximal möglichen Aktionsweg des Antriebes. Besonders bevorzugt ist hierbei, dass die oben beschriebene Verriegelungsanordnung auch zur Sicherung einer Notfallposition ausgebildet ist. Insbesondere kann hierbei das o. g. Verriegelungselement auch in der Notfallposition in Eingriff mit denen Schubelement sein. Auch hierbei kann das oben beschriebene Sperrelement das Verriegelungselement in der Notfallposition sichern.

Bei Vorhandensein einer Verriegelungsanordnung ist es notwendig, dass diese in einer Notfallsituation zuverlässig entriegelt wird. Dies kann zum einen über eine übergeordnete Steuerung, die auch den Antrieb auslöst, geschehen. Ist es allerdings bevorzugt, dass die Verriegelungsanordnung durch Einwirkung des Antriebs lösbar ist. In diesem Fall wirkt der Antrieb direkt oder indirekt derart auf die Verriegelungsanordnung ein, dass diese gelöst bzw. entriegelt wird. Der Antrieb wirkt hierbei bevorzugt rein mechanisch ein. Auf diese Weise kann eine Fehlfunktion der Verriegelungsanordnung weitgehend ausgeschlossen werden. Darüber hinaus lässt sich hierdurch mit einfachen Mitteln der Entriegelungsvorgang zeitlich auf die durch den Antrieb bewirkte Verstellung des Viergelenk-Getriebes abstimmen. Bevorzugt wirkt der Antrieb hierbei mittels eines Entriegelungselements auf das oben genannte Federelement ein. Besonders bevorzugt weist das Entriegelungselement eine Führungsschräge zur Auslenkung des Federelements auf.

Eine Verschiebung zwischen Basiselement und Schubelement ist nicht möglich, solange die Verriegelungsanordnung nicht gelöst ist. Wirkt der Antrieb zu diesem Zeitpunkt bereits auf Basiselement und Schubelement ein, also entgegen der Verriegelung, so führt dies ggf. zu hohen Belastungen für die beteiligten Bauteile. Daher ist gemäß einer bevorzugten Ausgestaltung der Erfindung vorgesehen, dass der Antrieb dazu eingerichtet ist, die Verriegelungsanordnung zu lösen, bevor er zwischen Basiselement und Schubelement wirkt. Dies kann, wie mit Bezug auf die Ausführungsbeispiele noch dargestellt wird, z. B. dadurch erreicht werden, dass bei einem Antrieb mit Wellbalg oder Kolben in Ruheposition ein Abstand zwischen Antrieb und Schubelement vorgesehen ist, während der Antrieb über ein Entriegelungselement mit der Verriegelungsvorrichtung auch in Ruheposition in Kontakt steht. Wird der Antrieb aktiviert, beginnt der Entriegelungsvorgang praktisch sofort, während aufgrund des genannten Abstandes zum Schubelement erst nach einem entsprechenden Hubweg des Kolbens bzw. Wellbalgs eine Einwirkung auf dieses stattfindet.

Das Sicherheitssystem ist dazu eingerichtet, in einer Notfallsituation den Antrieb auszulösen. Es kann in diesem Fall eigene Sensoren umfassen, mittels derer ein Unfall oder eine Gefahrensituation erkannt wird. Es kann auch eine übergeordnete Steuerung umfassen oder zumindest zum Anschluss an eine solche vorgesehen sein, wobei die übergeordnete Steuerung mit den Sensoren verbunden ist und ggf. weitere Sicherheitssysteme des Fahrzeugs aktivieren kann.

Durch die Erfindung wird weiterhin einen Getriebeglied für eine erfindungsgemäße Sicherheitssystem zur Verfügung gestellt. Ein solches Getriebeglied weist wenigstens zwei Gelenkpunkte zur Verbindung mit weiteren Getriebegliedern eines Viergelenk-Getriebes auf, wobei der Abstand der Gelenkpunkte durch einen pyrotechnisch betreibbaren Antrieb veränderbar ist. Das Getriebeglied kann hierbei den genannten Antrieb aufweisen; wenigstens aber verfügt es über Mittel zur Verbindung mit einem solchen Antrieb. Das Getriebeglied kann hierbei insbesondere ein Lenker sein, der ggf. einen zusätzlichen Gelenkpunkt zur Anlenkung eines Antriebs zur Höhenverstellung aufweist. Auch kann das Getriebeglied bevorzugt eine Sitzschiene aufweisen, mittels der der Fahrzeugsitz an einer

Bodenschiene geführt werden kann. Wie bereits angedeutet, kann die Erfindung ggf. dadurch realisiert werden, dass bei einem konventionellen Viergelenk-Getriebe ein konventionelles (starres) Getriebeglied durch ein erfindungsgemäßes Getriebeglied ersetzt wird. Der Eingriff in die Gesamtkonstruktion ist in diesem Fall also minimal.

Details der Erfindungen werden im Folgenden anhand von Ausführungsbeispielen mit Bezug auf die Figuren erläutert. Hierbei zeigt:
- Fig.1: eine perspektivische Darstellung einer ersten Ausführungsform eines Lenkers für ein erfindungsgemäßes Sicherheitssystem in Ruheposition;
- Fig.2a: eine Seitenansicht des Lenkers aus der Fig.1;
- Fig.2b: eine Schnittdarstellung gemäß der Linie IIb-IIb in Fig.2a;
- Fig.2c: eine Seitenansicht aus der Richtung IIc in Fig.2a;
- Fig.2d: eine Schnittdarstellung gemäß der Linie IId-IId in Fig.2c;
- Fig.3a: einer Seitenansicht des Lenkers aus Fig.1 in einer Zwischenposition nach Aktivierung des Antriebes;
- Fig.3b: eine Schnittdarstellung gemäß der Linie IIIb-IIIb in Fig.3a;
- Fig.4a: eine Seitenansicht des Lenkers aus Fig.1 in einer Notfallposition;
- Fig.4b: eine Schnittdarstellung gemäß der Linie IVb-IVb in Fig.4a;
- Fig.4c: eine Seitenansicht aus der Richtung IVc in Fig.4a;
- Fig.4d: eine Schnittdarstellung gemäß der Linie IVd-IVd in Fig.4c;
- Fig.5: eine schematische Darstellung der Funktionsweise eines Sicherheitssystems unter Verwendung des Lenkers aus Fig.1;
- Fig.6: eine Seitenansicht einer weiteren Ausführungsform eines erfindungsgemäßen Sicherheitssystems in einer Ruheposition;
- Fig.7: eine Darstellung des Sicherheitssystems aus Fig.6 in einer Notfallposition; sowie
- Fig.8: eine schematische Darstellung der Funktionsweise des Sicherheitssystems aus Fig.6.

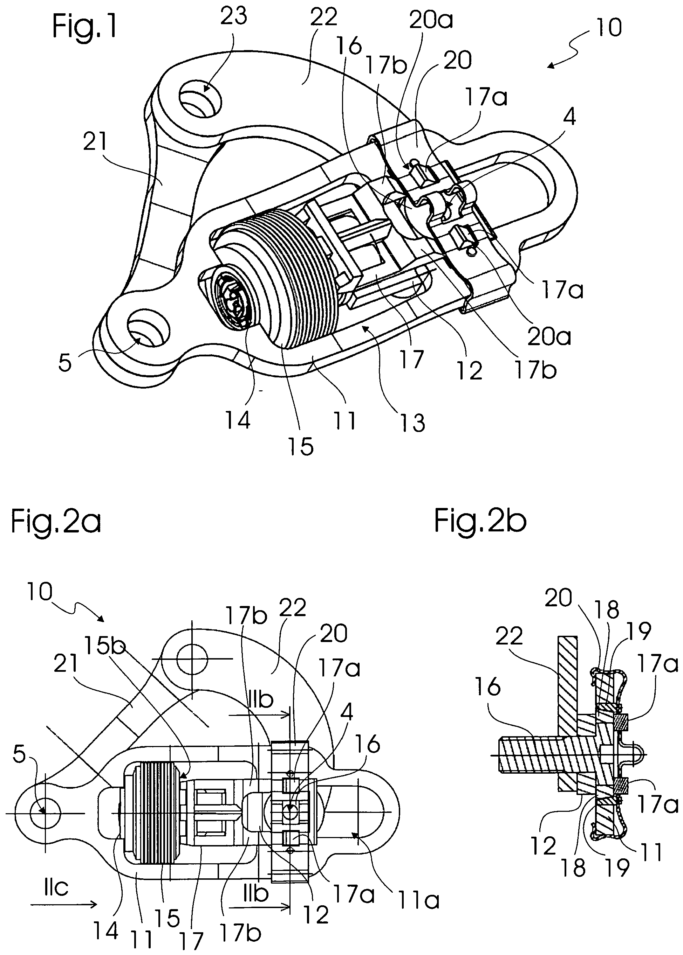

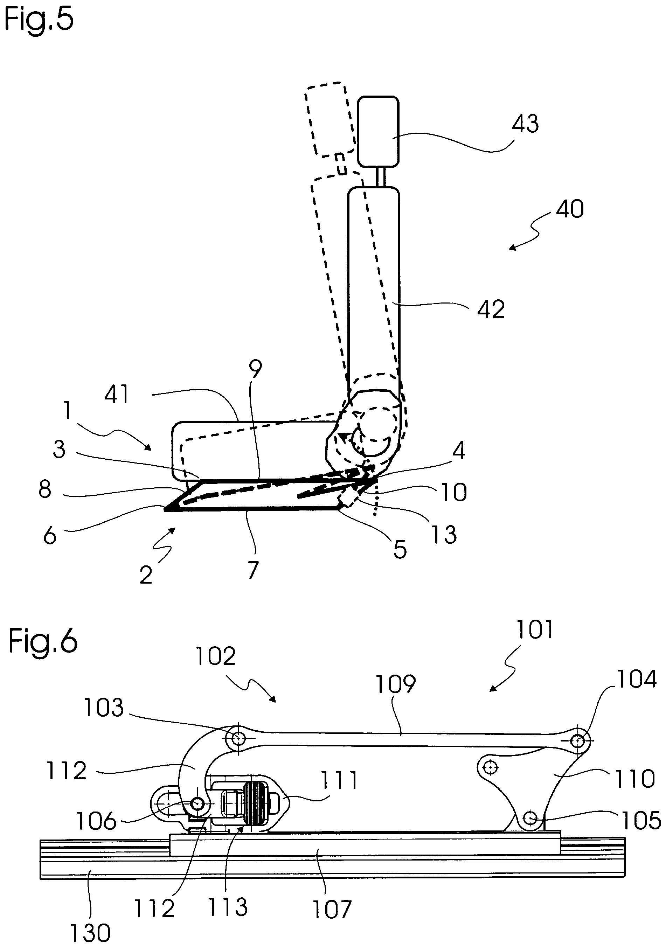

In Fig.1-4d ist ein hinterer Lenker 10 für ein erfindungsgemäßes Sicherheitssystem 1 gezeigt. Hierbei zeigen Fig.1-2d den Lenker 10 in einer Ruheposition. Der Lenker 10 bildet hierbei einen Teil eines in Fig.5 dargestellten Parallelogramm-Getriebes 2, das zur Höhenverstellung eines Fahrzeugsitzes 40 dient: Der Lenker 10 ist hierbei über einen hinteren oberen Gelenkpunkt 4 mit einem oberen Schenkel 9 des Parallelogramm-Getriebes 2 verbunden, wobei der obere Schenkel 9 mit einer Sitzschale eines Fahrzeugsitzes 40 verbunden ist oder durch diese gebildet wird. Der Lenker 10 ist des Weiteren über einen hinteren unteren Gelenkpunkt 5 mit einem unteren Schenkel 7 des Parallelogramm-Getriebes 2 verbunden, wobei der untere Schenkel 7 mit einer Sitzschiene verbunden ist oder durch diese gebildet wird. Es versteht sich, dass der gesamte Mechanismus zur Höhenverstellung in aller Regel jeweils zwei identische bzw. zueinander spiegelsymmetrische Exemplare der genannten Lenker 8, 10 bzw. Schenkel 7, 9 umfasst, die paarweise links und rechts unter dem Fahrzeugsitz 40 angeordnet sind. Hierbei sind entsprechende Elemente ggf. durch senkrecht zur Ebene des Parallelogramm-Getriebes 2 verlaufende Stangen o. Ä. miteinander verbunden. Der Einfachheit halber sind hier nur die Getriebeglieder einer Seite dargestellt.

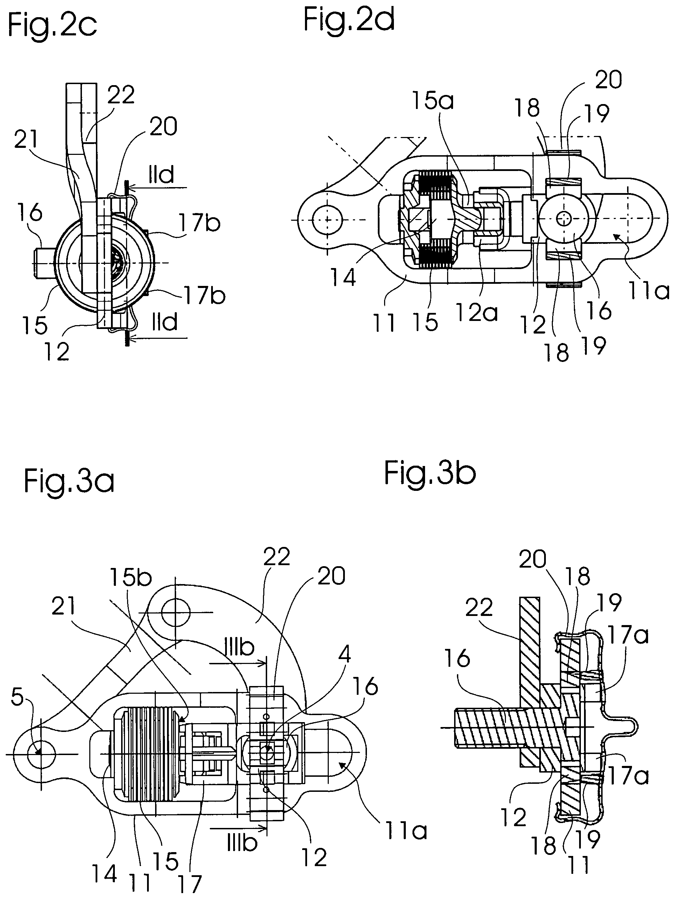

Wie in der perspektivischen Darstellung in Fig.1 erkennbar, weist der Lenker 10 ein Basiselement 11 auf sowie ein verschieblich daran angeordnetes Schubelement 12. Das Basiselement 11 ist über den hinteren unteren Gelenkpunkt 5 des Weiteren mit einem ersten Lenkerelement 21 verbunden, dass über einen Verstellungsgelenkpunkt 23 zum einen mit einem (nicht dargestellten) Antrieb für eine Höhenverstellung, zum anderen mit einem zweiten Lenkerelement 22 verbunden ist, welches wiederum über den hinteren oberen Gelenkpunkt 4 mit dem Schubelement 12 verbunden ist. Die genannten Verbindungen sind jeweils drehbar ausgeführt, wobei geeignete Verbindungsmittel wie Stifte oder Schrauben hier aus Gründen der Übersichtlichkeit überwiegend nicht dargestellt sind. Dargestellt ist lediglich eine Schraube 16, die das Schubelement 12 sowie das zweite Lenkerelement 22 verbindet. Hierbei ist eine Führungsausnehmung 11a (auch in Fig.2 erkennbar) des Basiselements 11 derart auf die Abmessungen des Kopfes der Schraube 16 abgestimmt, dass dieser darin geführt verschoben werden kann.

Der Lenker 10 weist einen Antrieb 13 auf, der als Hauptkomponenten einen Mikrogasgenerator 14, einen Wellbalg 15 sowie ein Entriegelungselement 17 umfasst. Wie insbesondere aus der Schnittdarstellung in Fig.2d erkennbar ist, ist der Mikrogasgenerator 14 innerhalb des Wellbalgs 15 angeordnet, um diesen bei Aktivierung von innen mit Gasdruck zu beaufschlagen. Durch die Symmetrieachse des Wellbalgs und dessen Faltung 15 ist eine Expansionsrichtung desselben vorgegeben. Ein auf einer vom Mikrogasgenerator 14 abgewandten angeordneter Zylinderabschnitt 15a des Wellbalgs 15 ist in einen zylindrischen Aufnahmeabschnitt 12a des Schubelements 12 eingeführt, wobei in der Ruheposition der Zylinderabschnitt 15a in Expansionsrichtung vom Schubelement 12 beabstandet ist. Mit einer den Zylinderabschnitt 15a ringförmig umgebenden Stirnfläche 15b liegt der Wellbalg 15 am Entriegelungselement 17 an. Dieses ist entlang der Expansionsrichtung des Wellbalgs 15 verschieblich innerhalb des Basiselements 11 geführt.

Das Entriegelungselement 17 weist paarweise angeordnete erste Entriegelungsvorsprünge 17a sowie zweite Entriegelungsvorsprünge 17b auf, die auf einer vom Wellbalg 15 abgewandten Seite jeweils abgeschrägt sind. Ein Federelement 20 umgreift das Basiselement 11 und weist hierbei Ausnehmungen 20a auf, in die die ersten Entriegelungsvorsprünge 17a in der Ruheposition eingreifen. Wie in Fig.2d erkennbar ist, befinden sich zwei Verriegelungselemente 18 beidseitig in formschlüssigem Eingriff mit dem Kopf der Schraube 16. Diese verhindern so eine ungewollte Verschiebung des Schubelements 12, wobei sie ihrerseits senkrecht zu einer Expansionsrichtung des Wellbalgs 15 im Basiselement 11 verschiebbar geführt sind, allerdings in der Ruheposition durch zwei Sperrkeile 19 gesichert sind. Die Sperrkeile 19 wiederum sind mit dem Federelement 20 verbunden.

Der Entriegelungsvorgang wird nun insbesondere mit Bezug auf Fig.3a sowie 3b erläutert. Wird der Antrieb 13 aktiviert, indem der Mikrogasgenerator 14 ausgelöst wird, so führt dies zu einer Druckbeaufschlagung des Wellbalgs 15, der somit in seiner Expansionsrichtung über die Stirnfläche 15b wiederum das Entriegelungselement 17 mit Kraft beaufschlagt. Dieses wirkt mit den Entriegelungsvorsprüngen 17a, 17b auf das Federelement 20 ein, das hierdurch entgegen einer Federkraft vom Basiselement 11 weg gedrückt wird, wie insbesondere in Fig.3b zu erkennen ist. Hierdurch werden die Sperrkeile 19 entsprechend der Bewegung des Federelements 20 mitgeführt und geben so die Verriegelungselemente 18 frei. Aufgrund der Beabstandung von Zylinderabschnitt 15a und Schubelement 12 wird letzteres zu diesem Zeitpunkt noch nicht mit Kraft beaufschlagt, wodurch eventuellen Beschädigungen vorgebeugt wird. Der Abstand ist so gewählt, dass der Zylinderabschnitt 15a erst mit dem Schubelement 12 eingreift, wenn die Sperrkeile 19 entfernt wurden. Das Schubelement 12 wird nunmehr durch den Zylinderabschnitt 15a mit Kraft beaufschlagt und drückt hierdurch seinerseits die Verriegelungselemente 18 auseinander, wie in Fig.3b dargestellt ist.

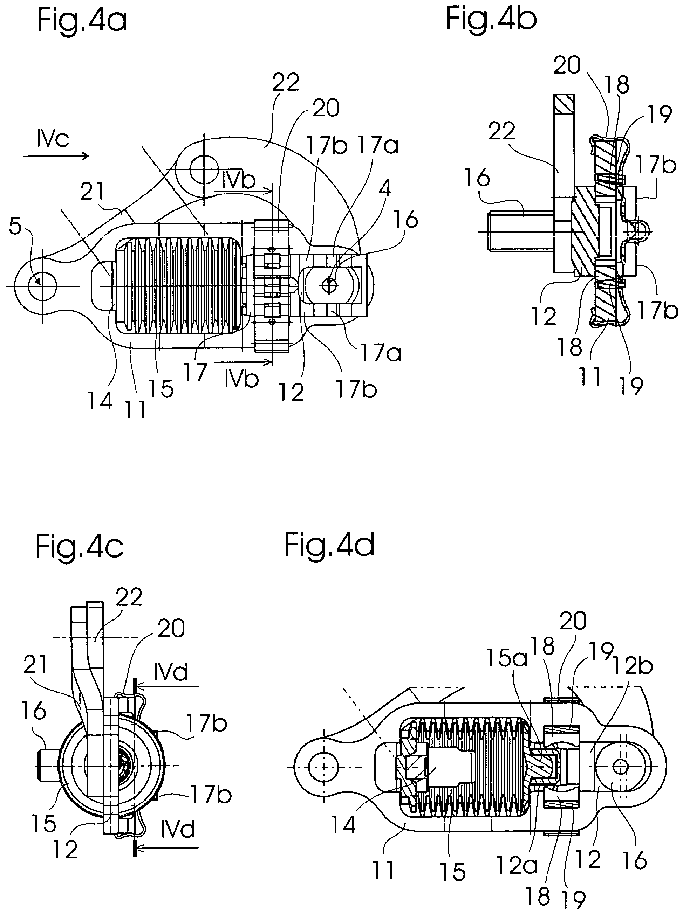

Das Schubelement 12 wird anschließend mittels des Entriegelungselements 17 bis in eine Endposition, die der Notfallposition entspricht, geschoben, was in Fig.4a-4d dargestellt ist. Das Federelement 20 wird auf dem Weg in diese Endposition durch die zweiten Entriegelungsvorsprünge 17b auf Abstand zum Basiselement 11 gehalten, bis es auf einer dem Wellbalg 15 zugewandten Seite der zweiten Entriegelungsvorsprünge 17b wieder in seiner Ausgangsposition zurückkehren kann. Hierdurch werden die Sperrkeile 19 ebenfalls wieder in ihrer Ausgangsposition zurückgedrückt und schieben hierdurch die Verriegelungselemente 18 ebenfalls wieder nach innen aufeinander zu. Die Verriegelungselemente 18 liegen hier an einem Verriegelungsanschlag 12b des Schubelements 12 an, so dass auch in der Endposition das Schubelement 12 wiederum gegen Verschiebung gesichert ist.

Fig.5 zeigt stark schematisiert die Wirkungsweise des Fig.1-4d gezeigten Lenkers 10 innerhalb des Parallelogramm-Getriebes 2, das zur Höhenverstellung des Fahrzeugsitzes 40 dient. Hierbei zeigen durchgezogene Linien jeweils die Ruheposition und gestrichelte Linien die Notfallposition. In der Ruheposition sind die vier Getriebeglieder 7, 8, 9, 10 nach Art eines Parallelogramms angeordnet, um die normale Höhenverstellung des Fahrzeugsitzes 40 zu gewährleisten. Da der untere Schenkel 7 mit einer (nicht dargestellten) Bodenschiene verbunden ist, führt die Aktivierung des Antriebs 13 zu einem Anheben des hinteren oberen Gelenkpunktes 4. Aufgrund der konstanten Länge des vorderen Lenkers 8 sowie des oberen Schenkels 9 und des sich vergrößernden Abstandes zwischen dem hinteren oberen Gelenkpunkt 4 und dem vorderen unteren Gelenkpunkt 6 strecken sich der vordere Lenker 8 sowie der obere Schenkel 9 durch Drehung in einem vorderen oberen Gelenkpunkt 3, was zu einer Absenkung des vorderen oberen Gelenkpunktes 3 führt.

Im Ergebnis führt die Anhebung des hinteren oberen Gelenkpunktes 4 und die Absenkung des vorderen oberen Gelenkpunktes 3 zu einem Kippen des mit den oberen Gelenkpunkten 3, 4 verbundenen Fahrzeugsitzes 40. Die Vorderkante einer Sitzfläche 41 bewegt sich hierbei leicht nach unten und die Hinterkante nach oben. Gleichzeitig wird der obere Teil einer Rückenlehne 42 und insbesondere eine hieran angeordnete Kopfstütze 43 nach vorne bewegt. Hierdurch wird in einer Notfallsituation der obere Rückenbereich sowie der Kopfbereich eines Insassen besser abgestützt, wodurch einem Schleudertrauma wirksam vorgebeugt werden kann.

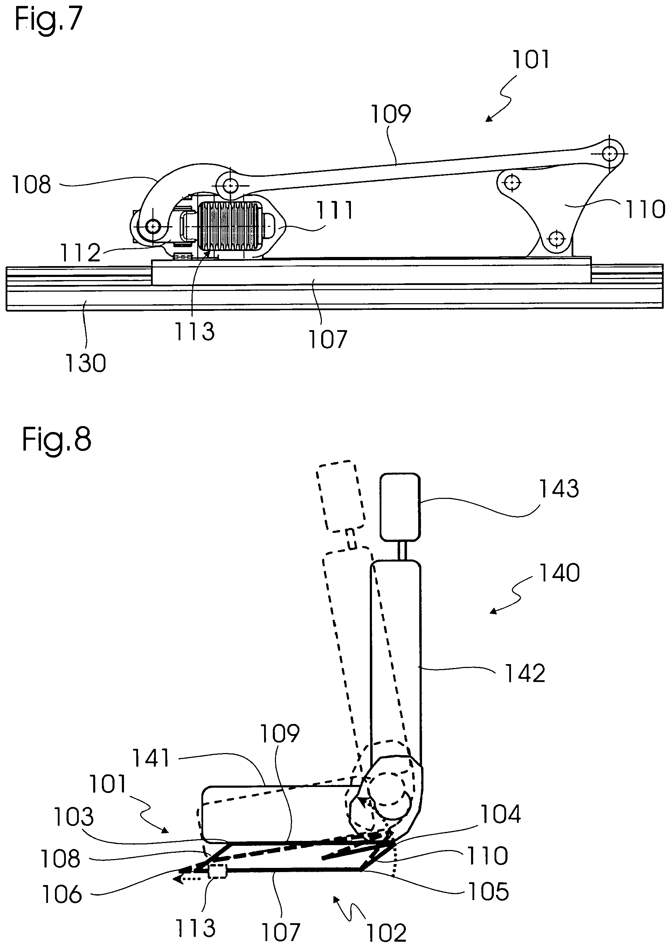

In Fig.6 und 7 ist eine weitere Ausführungsform eines erfindungsgemäßen Sicherheitssystems 101 dargestellt. Dieses umfasst einen Viergelenk-Getriebe 102, dass von der Parallelogrammform abweicht. So ist der Abstand zwischen zwei vorderen Gelenkpunkten 103, 106 geringer als der zwischen zwei hinteren Gelenkpunkten 104, 105. Daher ist bei diesem System eine Höhenverstellung eines Fahrzeugsitzes 140 stets an eine (geringfügige) Kippbewegung gekoppelt. Solche Systeme sind im Stand der Technik bekannt. Vorliegend sind ein vorderer Lenker 108, ein hinterer Lenker 110 sowie ein oberer Schenkel 109 in völlig konventioneller Weise ausgebildet, während eine den unteren Schenkel bildende Sitzschiene 107 mit einem Basiselement 111 versehen ist, an dem ein Antrieb 113 sowie ein Schubelement 112 angeordnet sind. Die Sitzschiene 107 ist an einer Bodenschiene 130 eines Fahrzeugs arretiert. Das Basiselement 111, der Antrieb 113 sowie das Schubelement 112 unterscheiden sich im Aufbau nicht wesentlich von dem in Fig.1-4d gezeigten Ausführungsbeispiel und werden daher nicht weiter erläutert. Allerdings ist hierbei am Schubelement 112 ein vorderer unterer Gelenkpunkt 106 angeordnet, über den die Sitzschiene 107 mit dem vorderen Lenker 108 verbunden ist.

Wird der Antrieb 113 aktiviert, so wird das Schubelement 112 mit dem vorderen unteren Gelenkpunkt 106 nach vorne geschoben, was wiederum zu einer Streckung von vorderem Lenker 108 und oberem Schenkel 109 durch Drehung in einem vorderen oberen Gelenkpunkt 103 führt. Wie in Fig.8 dargestellt, führt dies zum einen zu einer Absenkung des vorderen oberen Gelenkpunktes 103. Allerdings kommt es aufgrund des über den vorderen Lenker 108 sowie den oberen Schenkel 109 auf den hinteren Lenker 110 wirkenden Zuges auch zu einer leichten Drehung desselben um einen hinteren unteren Gelenkpunkt 105 und somit zu einem leichten Anheben des hinteren oberen Gelenkpunktes 104. Auch hierdurch wird somit ein Kippen des Fahrzeugsitzes 140 erreicht, wodurch eine Rückenlehne 142 und eine hieran angeordnete Kopfstütze 143 nach vorne bewegt werden, um einen oberen Rückenbereich und Kopfbereich eines Insassen besser abzustützen.

### Bezugszeichenliste

- 1: Sicherheitssystem
- 2: Parallelogramm-Getriebe
- 3: vorderer oberer Gelenkpunkt
- 4: hinterer oberer Gelenkpunkt
- 5: hinterer unterer Gelenkpunkt
- 6: vorderer unterer Gelenkpunkt
- 7: unterer Schenkel
- 8: vorderer Lenker
- 9: oberer Schenkel
- 10: hinterer Lenker
- 11: Basiselement
- 11a: Führungsausnehmung
- 12: Schubelement
- 12a: Aufnahmeabschnitt
- 12b: Verriegelungsanschlag
- 13: Antrieb
- 14: Mikrogasgenerator
- 15: Wellbalg
- 15a: Zylinderabschnitt
- 15b: Stirnfläche
- 16: Schraube
- 17: Entriegelungselement
- 17a: erster Entriegelungsvorsprung
- 17b: zweiter Entriegelungsvorsprung
- 18: Verriegelungselement
- 19: Sperrkeil
- 20: Federelement
- 20a: Ausnehmung
- 21: ersten Lenkerelement
- 22: zweiten Lenkerelement
- 23: Verstellungsgelenkpunkt
- 40: Fahrzeugsitz
- 41: Sitzfläche
- 42: Rückenlehne
- 43: Kopfstütze
- 101: Sicherheitssystem
- 102: Viergelenk-Getriebe
- 103: vorderer oberer Gelenkpunkt
- 104: hinterer oberer Gelenkpunkt.
- 105: hinterer unterer Gelenkpunkt
- 106: vorderer unterer Gelenkpunkt
- 107: unterer Schenkel, Sitzschiene
- 108: vorderer Lenker
- 109: oberer Schenkel
- 110: hinterer Lenker
- 111: Basiselement
- 112: Schubelement
- 113: Antrieb
- 130: Bodenschiene
- 140: Fahrzeugsitz
- 142: Rückenlehne
- 143: Kopfstütze

## Patentansprüche

1. Sicherheitssystem (1, 101) für einen Fahrzeugsitz (40, 140) mit einem Viergelenk-Getriebe (2, 102), umfassend
- vier Getriebeglieder (7, 8, 9, 10, 107, 108, 109, 110), die zur Höhenverstellung des Fahrzeugsitzes (40, 140) paarweise drehbar miteinander verbunden sind an
- einem vorderen oberen Gelenkpunkt (3, 103),
- einem hinteren oberen Gelenkpunkt (4, 104),
- einem hinteren unteren Gelenkpunkt (5, 105) und
- einem vorderen unteren Gelenkpunkt (6, 106) sowie
- wenigstens einen Antrieb (13, 113),
wobei durch den wenigstens einen Antrieb (13, 113) der Abstand wenigstens zweier benachbarter Gelenkpunkte (4, 5, 105, 106) veränderbar ist, um den Fahrzeugsitz (40, 140) nach vorne zu kippen,, **dadurch gekennzeichnet, dass** wenigstens ein Antrieb (13, 113) pyrotechnisch betreibbar ist.

2. Sicherheitssystem nach Anspruch 1, **dadurch gekennzeichnet, dass** durch wenigstens einen Antrieb (13) der Abstand zwischen den hinteren Gelenkpunkten (4, 5) verlängerbar ist.

3. Sicherheitssystem nach wenigstens einem der vorherigen Ansprüche, **dadurch gekennzeichnet, dass** durch wenigstens einen Antrieb (113) der Abstand zwischen den unteren Gelenkpunkten (105, 106) verlängerbar ist.

4. Sicherheitssystem nach wenigstens einem der vorherigen Ansprüche, **dadurch gekennzeichnet, dass** wenigstens ein Antrieb (13, 113) einen Wellbalg (15) umfasst.

5. Sicherheitssystem nach wenigstens einem der vorherigen Ansprüche, **dadurch gekennzeichnet, dass** ein Getriebeglied (10, 107) ein Basiselement (11, 111) und ein hiermit verschieblich verbundenes Schubelement (12, 112) umfasst, zwischen denen ein Antrieb (13, 113) wirkt.

6. Sicherheitssystem nach wenigstens einem der vorherigen Ansprüche, **gekennzeichnet durch** eine Verriegelungsanordnung (18, 19, 20) zur Sicherung einer Ruheposition.

7. Sicherheitssystem nach den Ansprüchen 5 und 6, **dadurch gekennzeichnet, dass** wenigstens ein Verriegelungselement (18) in der Ruheposition formschlüssig mit dem Schubelement (12) eingreift, wobei das Verriegelungselement (18) am Basiselement (11) verschieblich angeordnet und in der Ruheposition gegen Verschiebung gesichert ist.

8. Sicherheitssystem nach wenigstens einem der Ansprüche 6 oder 7, **dadurch gekennzeichnet, dass** die Verriegelungsanordnung (18, 19, 20) in der Ruheposition durch ein Federelement (20) verriegelt gehalten ist.

9. Sicherheitssystem nach Anspruch 8, **dadurch gekennzeichnet, dass** das Verriegelungselement (18) durch wenigstens ein Sperrelement (19) gesichert ist, das in der Ruheposition durch Beaufschlagung durch das Federelement (20) im formschlüssigen Eingriff mit dem Verriegelungselement (18) gehalten ist.

10. Sicherheitssystem nach wenigstens einem der Ansprüche 6 bis 9, **dadurch gekennzeichnet, dass** die Verriegelungsanordnung (18, 19, 20) auch zur Sicherung einer Notfallposition ausgebildet ist.

11. Sicherheitssystem nach wenigstens einem der Ansprüche 6 bis 10, **dadurch gekennzeichnet, dass** die Verriegelungsanordnung (18, 19, 20) durch Einwirkung des Antriebs (13, 113) lösbar ist.

12. Sicherheitssystem nach wenigstens einem der Ansprüche 6 bis 11, **dadurch gekennzeichnet, dass** der Antrieb (13, 113) dazu eingerichtet ist, die Verriegelungsanordnung (18, 19, 20) zu lösen, bevor er zwischen Basiselement (11) und Schubelement (12) wirkt.

13. Getriebeglied (10, 107) für ein Sicherheitssystem (1, 101) nach einem der vorherigen Ansprüche, mit wenigstens zwei Gelenkpunkten (4, 5, 105, 106) zu Verbindung mit weiteren Getriebegliedern eines Viergelenk-Getriebes (2, 102), **dadurch gekennzeichnet, dass** der Abstand der Gelenkpunkte (4, 5, 105, 106) durch einen pyrotechnisch betreibbaren Antrieb (13, 113) veränderbar ist.

## Claims

1. Safety system (1, 101) for a vehicle seat (40, 140) having a four-bar linkage mechanism (2, 102), comprising
- four mechanism members (7, 8, 9, 10, 107, 108, 109, 110) which, for height adjustment of the vehicle seat (40, 140), are rotatably connected with each other in pairs at
- a front upper hinge point (3, 103),
- a rear upper hinge point (4, 104),
- a rear lower hinge point (5, 105) and
- a front lower hinge point (6, 106) and also
- at least one drive (13, 113),
the distance between at least two adjacent hinge points (4, 5, 105, 106) being variable by the at least one drive (13, 113), in order to tilt the vehicle seat (40, 140) forwards, **characterised in that** at least one drive (13, 113) is pyrotechnically operable.

2. Safety system according to claim 1, **characterised in that** the distance between the rear hinge points (4, 5) is extendable by at least one drive (13).

3. Safety system according to at least one of the preceding claims, **characterised in that** the distance between the lower hinge points (105, 106) is extendable by at least one drive (113).

4. Safety system according to at least one of the preceding claims, **characterised in that** at least one drive (13, 113) comprises a bellows (15).

5. Safety system according to at least one of the preceding claims, **characterised in that** a mechanism member (10, 107) comprises a base element (11, 111) and a pushing element (12, 112) connected displaceably therewith, between which a drive (13, 113) acts.

6. Safety system according to at least one of the preceding claims, **characterised by** a locking arrangement (18, 19, 20) for securing a rest position.

7. Safety system according to claims 5 and 6, **characterised in that** at least one locking element (18) engages, in the rest position, in a form-fitting manner with the pushing element (12), the locking element (18) being displaceably arranged on the base element (11) and secured in the rest position against displacement.

8. Safety system according to one of claims 6 or 7, **characterised in that** the locking element (18, 19, 20) is held locked in the rest position by a spring element (20).

9. Safety system according to claim 8, **characterised in that** the locking element (18) is secured by at least one blocking element (19) which, in the rest position, is held in a form-fitting engagement with the locking element (18) by being acted upon by the spring element (20).

10. Safety system according to at least one of claims 6 to 9, **characterised in that** the locking arrangement (18, 19, 20) is also configured for securing an emergency position.

11. Safety system according to at least one of claims 6 to 9, **characterised in that** the locking arrangement (18, 19, 20) is releasable by action of the drive (13, 113).

12. Safety system according to at least one of claims 6 to 11, **characterised in that** the drive (13, 113) is adapted to release the locking arrangement (18, 19, 20) before it acts between the base element (11) and the pushing element (12).

13. Mechanism member (10, 107) for a safety system (1, 101) according to one of the preceding claims, having at least two hinge points (4, 5, 105, 106) for connection with further mechanism members of a four-bar linkage mechanism (2, 102), **characterised in that** the distance between the hinge points (4, 5, 105, 106) is variable by a pyrotechnically operable drive (13, 113).

## Revendications

1. Système de sécurité (1, 101) pour un siège de véhicule (40, 140) avec un engrenage à quatre articulations (2, 102), comprenant
- quatre organes d'engrenage (7, 8, 9, 10, 107, 108, 109, 110), qui sont reliés les uns aux autres par paires de manière à pouvoir tourner aux fins du réglage en hauteur du siège de véhicule (40, 140) au niveau
-- d'un point d'articulation (3, 103) supérieur avant,
-- d'un point d'articulation (4, 104) supérieur arrière,
-- d'un point d'articulation (5, 105) inférieur arrière, et
-- d'un point d'articulation (6, 106) inférieur avant,
ainsi
- qu'au moins un entraînement (13, 113),
dans lequel la distance entre au moins deux points d'articulation (4, 5, 105, 106) adjacents peut être modifiée par l'au moins un entraînement (13, 113) afin de basculer vers l'avant le siège de véhicule (40, 140), **caractérisé en ce qu'**au moins un entraînement (13, 113) peut fonctionner de manière pyrotechnique.

2. Système de sécurité selon la revendication 1, **caractérisé en ce que** la distance entre les points d'articulation (4, 5) arrière peut être rallongée par au moins un entraînement (13).

3. Système de sécurité selon au moins l'une quelconque des revendications précédentes, **caractérisé en ce que** la distance entre les points d'articulation (105, 106) inférieurs peut être rallongée par au moins un entraînement (113).

4. Système de sécurité selon au moins l'une quelconque des revendications précédentes, **caractérisé en ce qu'**au moins un entraînement (13, 113) comprend un soufflet ondulé (15).

5. Système de sécurité selon au moins l'une quelconque des revendications précédentes, **caractérisé en ce qu'**un organe d'engrenage (10, 107) comprend un élément de base (11, 111) et un élément de poussée (12, 112) relié de manière à pouvoir coulisser à ce dernier, entre lesquels un entraînement (13, 113) agit.

6. Système de sécurité selon au moins l'une quelconque des revendications précédentes, **caractérisé par** un ensemble de verrouillage (18, 19, 20) servant à bloquer une position de repos.

7. Système de sécurité selon les revendications 5 et 6, **caractérisé en ce qu'**au moins un élément de verrouillage (18) vient en prise dans la position de repos par complémentarité de forme avec l'élément de poussée (12), dans lequel l'élément de verrouillage (18) est disposé de manière à pouvoir coulisser au niveau de l'élément de base (11) et est bloqué dans la position de repos pour empêcher tout coulissement.

8. Système de sécurité selon au moins l'une quelconque des revendications 6 ou 7, **caractérisé en ce que** l'ensemble de verrouillage (18, 19, 20) est maintenu de manière verrouillée dans la position de repos par un élément formant ressort (20).

9. Système de sécurité selon la revendication 8, **caractérisé en ce que** l'élément de verrouillage (18) est bloqué par au moins un élément d'arrêt (19), qui est maintenu en prise par complémentarité de forme avec l'élément de verrouillage (18) dans la position de repos par une contrainte exercée par l'élément formant ressort (20).

10. Système de sécurité selon au moins l'une quelconque des revendications 6 à 9, **caractérisé en ce que** l'ensemble de verrouillage (18, 19, 20) est formé également aux fins du blocage d'une position d'urgence.

11. Système de sécurité selon au moins l'une quelconque des revendications 6 à 10, **caractérisé en ce que** l'ensemble de verrouillage (18, 19, 20) peut être déclenché par l'effet exercé par l'entraînement (13, 113).

12. Système de sécurité selon au moins l'une quelconque des revendications 6 à 11, **caractérisé en ce que** l'entraînement (13, 113) est mis au point afin de déclencher l'ensemble de verrouillage (18, 19, 20) avant qu'il n'agisse entre l'élément de base (11) et l'élément de poussée (12).

13. Organe d'engrenage (10, 107) pour un système de sécurité (1, 101) selon l'une quelconque des revendications précédentes, avec au moins deux points d'articulation (4, 5, 105, 106) destinés à être reliés à d'autres organes d'engrenage d'un engrenage à quatre articulations (2, 102), **caractérisé en ce que** la distance des points d'articulation (4, 5, 105, 106) peut être modifiée par un entraînement (13, 113) pouvant fonctionner de manière pyrotechnique.
